# FASCICULE DE BREVET EUROPEEN

(11) **EP 4 321 782 B1**
(45) Date de publication et mention de la délivrance du brevet: **12.03.2025**
(21) Numéro de dépôt: 23187206.0
(22) Date de dépôt: 24.07.2023
(51) Int. Cl.: F16K 15/02, F16K 17/04, F16K 17/30, F01N 3/30, F01N 3/22

(54) **VANNE À CLAPET MÉCANIQUE À DOUBLE RESSORT ET CIRCUIT DE PRÉCHAUFFAGE LA COMPRENANT**
DOPPELFEDER-VENTIL MIT MECHANISCHER KLAPPE UND VORWÄRMSCHALTUNG DAMIT
MECHANICAL DOUBLE-SPRING POPPET VALVE AND PREHEATING CIRCUIT INCLUDING SAME

(30) Priorité: 04.08.2022 FR 2208082
(43) Date de publication de la demande: 14.02.2024
(73) Titulaire: Sogefi Air & Cooling, 78280 Guyancourt (FR)
(72) Inventeur: STRACK, Olivier, 68590 RODERN (FR); ANCEL, Benoît, 68420 EGUISHEIM (FR); ANDRES, Michel, 68100 MULHOUSE (FR); VINCENTZ, Arthur, 67100 STRASBOURG (FR); MEYER, Dominique, 68230 WIHR-AU-VAL (FR)
(74) Mandataire: Cabinet Nuss

(56) Documents cités:
- FR-A1- 2 506 384
- US-A- 3 122 162

## Description

La présente invention concerne le domaine des équipements des véhicules à moteur thermique ou à propulsion hybride thermique/électrique, plus particulièrement le traitement des gaz d'échappement avant éjection de ces véhicules, et notamment leur traitement catalytique. Elle a plus spécifiquement pour objet une vanne de contrôle du flux gazeux pour le préchauffage du catalyseur ou pot catalytique, ainsi qu'un circuit de préchauffage pour un système d'échappement, intégrant une telle vanne.

Le catalyseur ou pot catalytique est un composant de la ligne d'échappement des véhicules automobiles disposant d'un moteur thermique : il s'agit d'un système anti-pollution ayant pour objectif de réduire l'émission de gaz polluants.

La combustion d'un moteur thermique n'étant jamais optimale, des substances toxiques telles que le monoxyde de carbone (CO) ou les oxydes d'azote (NOX) s'échappent du moteur.

Le catalyseur a justement pour objectif d'éliminer ces gaz nocifs pour la santé et l'environnement. Il est généralement constitué d'un intérieur poreux en céramique imprégnée de métaux précieux (alumine, oxyde de césium, palladium, radium). Cette structure interne est appelée « nid d'abeille ».

Un tel catalyseur est efficace lorsqu'il est chaud. En effet, la très haute température (400 °C) des gaz d'échappement provoque un phénomène de catalyse (réaction chimique) qui élimine les substances nocives. C'est pour cette raison qu'il est installé directement en sortie de moteur de manière à atteindre plus rapidement sa température optimale de fonctionnement.

Un véhicule peut éventuellement être équipé d'un pré-catalyseur et d'un second catalyseur en aval.

Or, 80% des polluants sont émis dans les 20 premières secondes de fonctionnement d'un moteur thermique. Une solution recherchée consiste donc à avoir un catalyseur chaud dès le démarrage du moteur thermique.

Il est connu dans l'art antérieur de préchauffer le catalyseur en l'exposant à un flux d'air chaud (par exemple au moins 40°C) et, pour ce faire, d'actionner une pompe, avant la mise en marche du moteur thermique ou pendant une première phase de roulement électrique, qui lui amène un flux d'air chaud, pour qu'il soit efficace le plus rapidement possible (pour retarder le moins possible la possibilité de démarrer le moteur thermique et permettre au système de contrôle des émissions d'atteindre son efficacité maximale très rapidement). Cette pompe est reliée au filtre à air et va envoyer de l'air chaud au catalyseur. La pompe fonctionne généralement une trentaine de secondes, et dès que le moteur thermique est allumé elle arrête de fonctionner, puisqu'il n'est plus besoin de préchauffer le catalyseur.

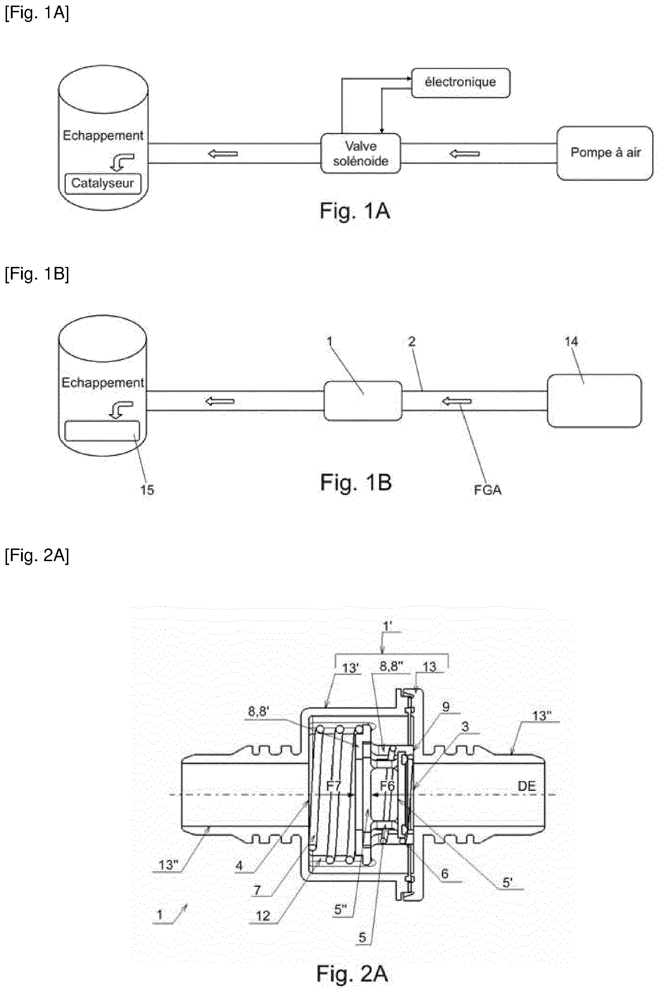

Entre la pompe et le catalyseur se trouve une vanne électrique avec une valve à solénoïde qui va s'ouvrir ou se fermer pour faire fonctionner ou non ce circuit de préchauffage du catalyseur (voir représentation schématique de la [Fig.1A]).

Dans l'art antérieur, la ligne de circulation de flux gazeux reliant la pompe au catalyseur est pourvue d'une vanne électrique (généralement une vanne à solénoïde) qui va ouvrir ou fermer ce circuit, en fonction de la phase de fonctionnement et de l'état du véhicule, pour autoriser l'injection d'air chaud durant la phase de préchauffage du catalyseur et isoler la pompe des gaz d'échappement lors du fonctionnement du moteur thermique.

Toutefois, cette solution connue à vanne électrique présente un certain nombre d'inconvénients : elle est encombrante et de constitution complexe (présence d'un système électrique), présente un prix de revient élevé pour une fonction accessoire, est sujet à un risque de dysfonctionnement (mise en œuvre de composants électriques dans un environnement à température élevée) et nécessite l'installation d'une liaison électrique jusqu'à la vanne.

La présente invention a pour but de pallier au moins les principaux de ces inconvénients, préférentiellement tous.

Par le document US 3122162, on connait déjà une vanne de contrôle pour fluide gazeux présentant sensiblement les caractéristiques constructives mentionnées dans le préambule de la revendication 1. Toutefois, cette vanne connue n'est pas adaptée pour une utilisation dans le contexte indiqué précédemment.

Le but de l'invention est atteint par une vanne de contrôle pour fluide gazeux, apte et destinée à être montée dans une ligne de circulation de fluide gazeux chaud selon le préambule de la revendication 1 et présentant en combinaison les caractéristiques de la partie caractérisante de cette revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1A] et
[Fig. 1B] sont des représentations schématiques simplifiées de circuits de préchauffage à air chaud pour catalyseur d'un système d'échappement d'un véhicule à moteur thermique, respectivement avec une vanne électrique selon l'état de la technique (figure 1A) et avec une vanne à clapet à actionnement mécanique selon l'invention (figure 1B) ;
[Fig. 2A],
[Fig. 2B] et
[Fig. 2C] sont des vues en coupe et en élévation d'un premier mode de réalisation de la vanne selon l'invention, selon un plan contenant la direction d'écoulement médiane (est aussi l'axe de symétrie de la vanne), la vanne étant respectivement au repos (figure 2A : véhicule à l'arrêt, moteur éteint), à l'état ouvert (figure 2B : phase de préchauffage du catalyseur, avant le démarrage du moteur thermique) et à l'état fermé (figure 2C : moteur thermique démarré, production de gaz d'échappement) ;
[Fig. 3] est une vue explosée de la vanne des figures 2 ;
[Fig. 4] est une vue en perspective du clapet faisant partie de la vanne es figures 2 et 3 ;
[Fig. 5] est une vue en perspective de la pièce d'agencement et de transmission d'effort faisant partie de la vanne des figures 2 et 3, et
[Fig. 6] est une vue en coupe et en élévation d'un second mode de réalisation de la vanne selon l'invention, selon un plan contenant la direction d'écoulement médiane (est aussi l'axe de symétrie de la vanne), la vanne étant au repos et son clapet dans une position intermédiaire de décollement.

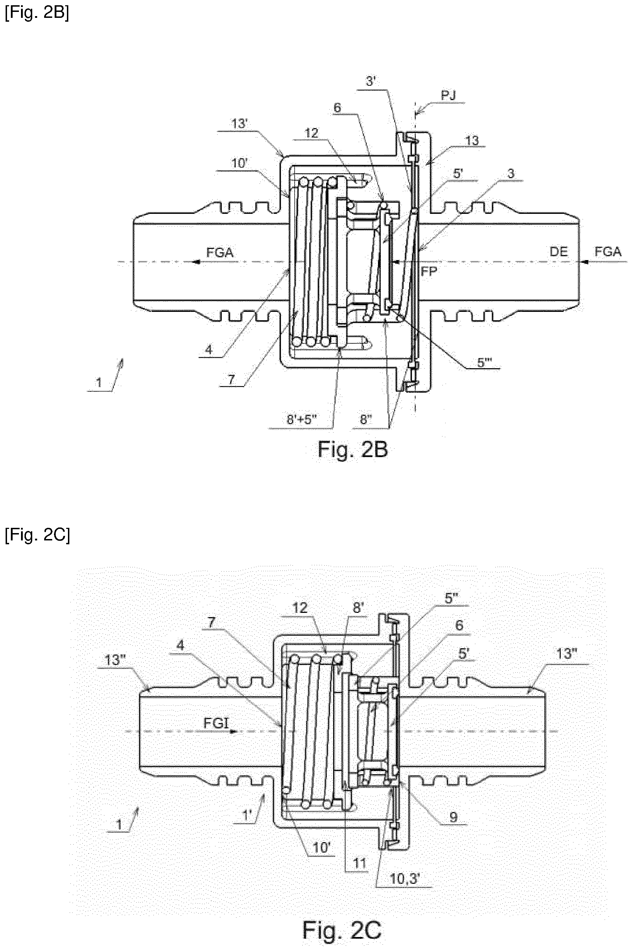

Les figures 2, 3 et 5 illustrent une vanne (1) de contrôle pour fluide gazeux, destinée à être montée dans une ligne (2) de circulation de fluide gazeux, par exemple du type de celle représentée figure 1B.

Cette vanne (1) comprend un corps creux (1') formant boîtier, lequel est configuré pour être traversé par un flux autorisé (FGA) de fluide gazeux circulant entre une ouverture d'entrée (3) et une ouverture de sortie (4) dudit boîtier (sens de circulation autorisé).

Dans ce corps creux (1') sont montés un clapet (5) mobile avec un organe d'obturation (5') et des moyens élastiques (6, 7) agissant sur ledit clapet (5). Ledit clapet (5) et les moyens élastiques (6, 7) sont arrangés et configurés de telle manière que le clapet (5) libère l'ouverture d'entrée (3) en cas de présence d'un flux gazeux autorisé (FGA) et obture ladite ouverture d'entrée (3) en cas de présence d'un flux gazeux (FGI) tendant à circuler en sens inverse (par rapport au flux gazeux autorisé), ce par déplacement de son organe d'obturation (5') respectivement entre une position à distance de la région (3') du boîtier comportant ladite ouverture d'entrée (3) -libération de l'ouverture d'entrée- et une position proche, voire au contact, de cette région (3') -obturation de l'ouverture d'entrée.

Les moyens élastiques (6, 7) consistent en deux ressorts agissant de manière mutuellement antagoniste sur le clapet (5) en vue de son déplacement, un premier ressort (6) sollicitant le clapet (5) à distance de l'ouverture d'entrée (3) et le second ressort (7) sollicitant ledit clapet (5) vers ladite ouverture d'entrée (3).

Conformément à l'invention, la force (F7) du second ressort (7) est, d'une part, au moins égale à la force (F6) du premier ressort (6) et, d'autre part, inférieure à la somme de la force (F6) du premier ressort (6) et de la force de pression (FP) du flux gazeux autorisé (FGA) sur l'organe d'obturation (5') du clapet (5), et ledit clapet (5) est, en l'absence de tout flux gazeux, déplacé et maintenu par le premier ressort (6) dans une position de décollement, correspondant préférentiellement tout juste à une absence de contact entre l'organe d'obturation (5') et l'ouverture d'entrée (3) et/ou la région (3') de cette dernière.

Grâce à une telle construction et aux dispositions de l'invention, on aboutit à un organe de régulation de flux gazeux (écoulement unidirectionnel) de structure simple, économique et peu encombrante, et ne nécessitant aucune source d'énergie, ni aucune commande (fonctionnement autonome). La vanne (1) de nature entièrement mécanique fournie par l'invention n'a de plus besoin d'aucun pilotage additionnel, électrique ou autre, ni d'aucune liaison de commande ou d'alimentation pour son fonctionnement. En outre, elle n'est pas sensible à la chaleur à laquelle elle est exposée durant son fonctionnement. De plus, en fournissant une position de repos du clapet (5) dans laquelle l'organe (5') est décollé (libération partielle de l'ouverture 3), on évite un collage dudit organe (5') par le gel et donc une perte de temps avant de permettre le passage d'un flux gazeux autorisé (FGA).

Les deux ressorts antagonistes (6 et 7) peuvent présenter, dans la plage de déplacement de l'organe d'obturation du clapet, des forces ou intensités de sollicitation élastique opposées de valeurs sensiblement égales, et par conséquent sa position de repos en l'absence de tout flux gazeux est située sensiblement à mi-chemin entre la position d'obturation complète et la position d'ouverture totale (position flottante, non calée, résultant d'un équilibre des forces dynamique).

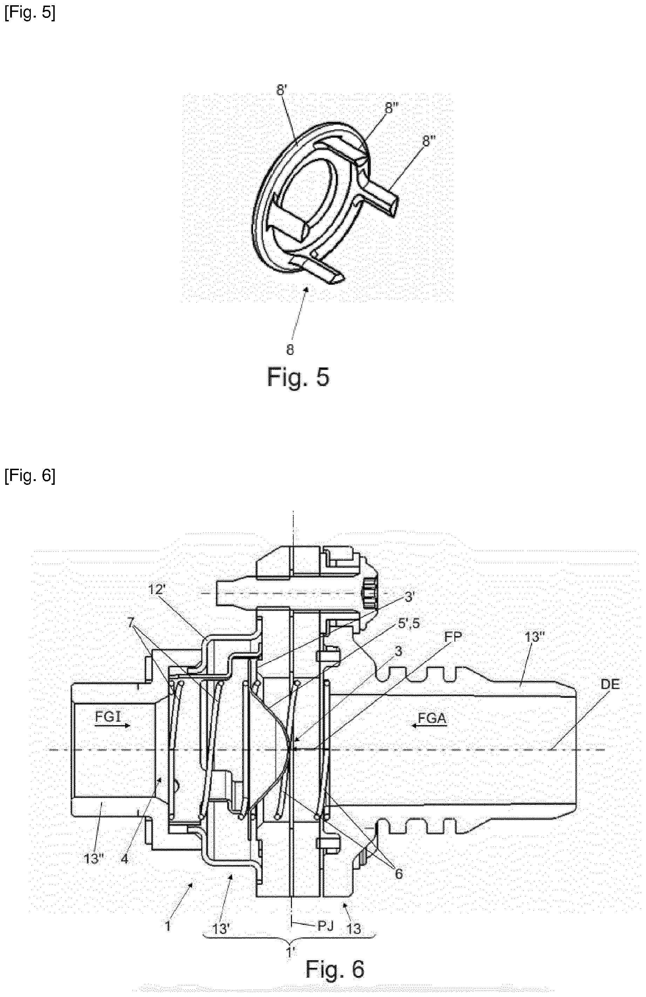

Selon un mode de construction, les deux ressorts (6 et 7) peuvent tous deux être en contact et agir directement sur l'organe d'obturation (5') du clapet (5), comme illustré à titre d'exemple sur la figure 6 (en position de repos de la vanne - position semi-ouverte). On peut noter que l'organe (5') est guidé en translation - par exemple par un insert de guidage (12') - selon une direction médiane (DE) d'écoulement pour un flux gazeux autorisé (FGA) traversant ledit corps creux (1') dans le sens ouverture d'entrée (3) vers ouverture de sortie (4), cette direction médiane (DE) étant confondue avec les axes centraux et d'action des forces des premier et second ressorts (6 et 7). On peut aussi noter que le premier ressort (6) est logé dans l'ouverture d'entrée (3) et que l'organe (5') présente une forme aérodynamique favorisant l'écoulement d'un flux gazeux autorisé et favorisant le déplacement de cet organe pour une obturation de l'ouverture d'entrée sous l'action d'un flux gazeux inverse.

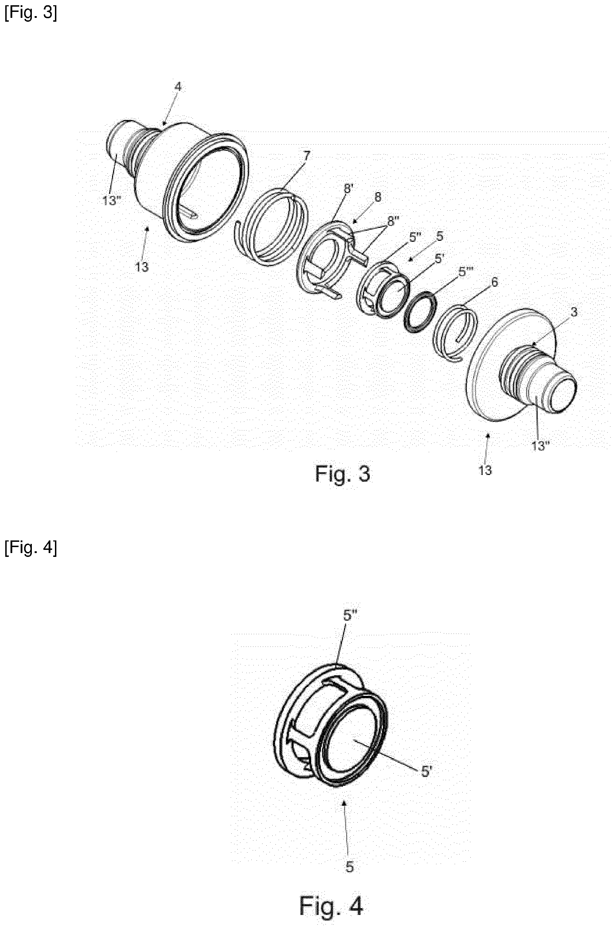

Également en accord avec l'invention, et comme illustré par les figures 2 et 3, la vanne (1) comprend également une pièce (8) d'agencement et de transmission d'effort, qui est montée mobile avec guidage dans le corps creux (1'), est soumise à l'action du second ressort (7) qui la sollicite en direction de la région (3') de l'ouverture d'entrée (3), coopère avec le clapet (5) et définit la position de décollement de ce dernier. Une telle pièce (8) permet de découpler l'action du second ressort (7) sur l'organe d'obturation (5') et de fournir une position de repos (décollement) répétible. Les conditions d'occurrence et la détermination physique et mécanique de la position de repos sont ainsi définies constructivement et de manière simple, précise et pérenne, que les deux ressorts (6 et 7) soient de forces/intensités sensiblement équivalente ou non.

Par soucis de simplicité constructive, la pièce (8) d'agencement et de transmission d'effort est configurée et agencée dans le corps creux (1') pour être directement soumise à l'action du second ressort (7) et pour transmettre la sollicitation de ce ressort au clapet (5) lorsqu'il est en contact avec ce dernier.

En relation avec ce mode de réalisation, il est avantageusement prévu que la force (F7) du second ressort (7) soit supérieure à la force (F6) du premier ressort et que ladite vanne (1) comprenne un moyen de butée (9) limitant le déplacement de ladite pièce (8) en direction de la région (3') de l'ouverture d'entrée (3) - sous l'action du second ressort de force supérieure -, et déterminant ainsi une position de décollement calée pour le clapet (5). Ainsi, la position de repos est fixée répétitivement de manière sûre et précise (cf. figure 2A).

Afin de limiter favorablement l'encombrement de l'ensemble vanne + ressorts, le clapet (5) et le premier ressort (6) sont logés à l'intérieur de la pièce (8) d'agencement et de transmission d'effort, le clapet (5) étant en outre guidé par ladite pièce (8) lors de ses déplacements dans le corps creux (1'), qui peuvent s'effectuer de concert avec ladite pièce (8) ou relativement à cette dernière (passage de la position de repos à la position d'obturation ou vice-versa pour le clapet, dans le cadre du second mode de réalisation).

En vue de limiter la perte de charge pour le flux gazeux autorisé (FGA), le clapet (5) et la pièce (8) d'agencement et de transmission d'effort présentent des structures évidées et ajourées de manière à offrir une résistance limitée à l'écoulement d'un flux gazeux autorisé (FGA) à travers l'intérieur du corps creux (1'), préférentiellement une section de passage à leur niveau dans le boîtier qui est au moins égale en surface à celle de l'ouverture d'entrée (3). Une telle section de passage peut être atteinte par exemple en élargissant au moins localement la section du corps creux (1') et en prévoyant une réalisation essentiellement ajourée pour le clapet (5) et ladite pièce (8) - cf. figure 3.

Comme illustré sur les figures 2, 3 et 6, et en accord avec une forme constructive préférée, simple et efficiente, l'ouverture d'entrée (3) et l'ouverture de sortie (4) sont situées mutuellement en regard, préférentiellement dans des parois opposées (10, 10') du corps creux (1'), et définissent par leur alignement mutuel une direction médiane (DE) d'écoulement pour le flux autorisé (FGA) traversant ledit corps creux (1') dans le sens ouverture d'entrée (3) vers ouverture de sortie (4). Avantageusement, cette direction médiane (DE) est confondue avec les axes centraux des premier et second ressorts (6 et 7) et avec la direction de déplacement en translation bidirectionnel du clapet (5) avec son organe d'obturation (5') dans le corps creux (1'). Ainsi, les directions d'action de toutes les forces agissant sur le clapet (5) et la pièce (8) sont confondues.

En relation notamment avec la construction préférée précitée, illustrée par exemple sur les figures 2, 3 et 6, le clapet (5) et la pièce (8) d'agencement et de transmission d'effort sont montées mobiles entre elles, avec faculté de translation relative mutuelle selon la direction médiane (DE) limitée unidirectionnellement par butée axiale (contact entre organe clapet 5 et pièce 8).

Également en relation avec la construction préférée précitée, il peut être prévu que le premier ressort (6) consiste en un ressort de compression, prenne appui sur la paroi (10) comportant l'ouverture d'entrée (3), avantageusement au niveau de la région (3') de cette dernière, entoure l'organe d'obturation (5') et contacte le clapet (5) au niveau d'une partie d'engagement (5") annulaire de ce dernier, qui est décalée par rapport à l'organe d'obturation (5') selon la direction médiane (DE) d'écoulement. Il peut en outre être prévu que le second ressort (7) consiste en un ressort de compression, prenne appui sur la paroi (10') comportant l'ouverture de sortie (4) et contacte la pièce (8) d'agencement et de transmission d'effort au niveau d'une partie d'engagement (8') annulaire de cette dernière. Enfin, en vue de faciliter et de sécuriser la coopération entre pièce (8) et organe (5'), la partie d'engagement (8') annulaire de la pièce (8) d'agencement et de transmission d'effort peut comporter une empreinte (11) configurée pour une réception sensiblement calée de la partie d'engagement annulaire (5") du clapet (5), ces deux parties d'engagement annulaires (5" et 8') présentant avantageusement des formes plates.

De même, dans la réalisation représentée figures 2 et 3, l'organe d'obturation (5') se présente sous la forme d'un disque pourvu d'un joint d'étanchéité périphérique (5"') et obture l'ouverture d'entrée (3) à la manière d'un opercule.

Toujours en particulier en relation avec la construction préférée précitée, la pièce (8) d'engagement et de transmission d'effort est avantageusement guidée en translation dans le corps creux (1') selon la direction médiane d'écoulement (DE) par coopération d'une partie d'engagement (8') de ladite pièce (8) avec des formations profilées (12) internes dudit corps (1'), la limitation du déplacement de ladite pièce (8) en direction de la région (3') de l'ouverture d'entrée (3), et donc la détermination de la position calée de décollement pour le clapet (5), étant obtenue soit par contact de ladite partie d'engagement (8') avec une ou des butées en extrémité desdites formations profilées (12) - variante non représentée -, soit par contact de pattes (8") prolongeant ladite partie d'engagement (8') avec la région (3') du corps creux (1') comportant l'ouverture d'entrée (3) - variante représentée figures 2 et 6.

Selon une réalisation pratique avantageuse, le corps creux (1') est formé de deux parties constitutives (13 et 13'), préférentiellement en matériau thermoplastique, assemblées entre elles au niveau d'un plan de joint (PJ), avantageusement perpendiculaire à une direction médiane (DE) d'écoulement pour le flux autorisé (FGA) traversant ledit corps creux (1'), chacune desdites parties comprenant l'une parmi les ouvertures d'entrée et de sortie (3, 4) et étant éventuellement prolongée d'un seul tenant par un embout de raccordement respectif (13").

Le choix des matériaux et des dimensionnements des premier et second ressorts (6 et 7) est du ressort de l'homme du métier et sera notamment dicté par la température des flux gazeux et par les efforts à fournir.

Le ou les matériaux du corps creux (1'), du clapet (5) et de la pèce (8) dépendra(ont) aussi des températures des flux gazeux (par exemple : entre environ 130°C et 240°C, on utilisera un matériau thermoplastique, et pour des températures supérieures à 240°C, on utilisera de l'aluminium ou de l'inox).

Le corps creux (1') peut également être bi matière, avec une partie constitutive en aluminium et une autre partie en thermoplastique, si la différence de températures est notable entre les deux côtés de la vanne.

L'invention a également pour objet, comme le montre à titre d'exemple la figure 1B, un circuit de préchauffage pour système d'échappement à catalyseur (15), ledit circuit comprenant une pompe (14) injectant de l'air chaud dans une ligne de circulation (2) qui l'amène jusqu'au catalyseur (15).

Selon l'invention, ce circuit de préchauffage est caractérisé en ce qu'il intègre une vanne de contrôle pour fluide gazeux (1) telle que décrite ci-dessus, le flux gazeux injecté par la pompe (14) correspondant au flux gazeux autorisé (FGA) pour cette vanne (1).

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention, le domaine de protection étant défini par les revendications.

## Revendications

1. Vanne (1) de contrôle pour fluide gazeux, destinée à être montée dans une ligne (2) de circulation de fluide gazeux, ladite vanne (1) comprenant un corps creux (1') formant boîtier, lequel est configuré pour être traversé par un flux autorisé (FGA) de fluide gazeux circulant entre une ouverture d'entrée (3) et une ouverture de sortie (4) dudit boîtier et dans lequel sont montés un clapet (5) mobile avec un organe d'obturation (5') et des moyens élastiques (6, 7) agissant sur ledit clapet (5), ledit clapet (5) et les moyens élastiques (6, 7) étant arrangés et configurés de telle manière que le clapet (5) libère l'ouverture d'entrée (3) en cas de présence d'un flux gazeux autorisé (FGA) et obture ladite ouverture d'entrée (3) en cas de présence d'un flux gazeux (FGI) tendant à circuler en sens inverse, ce par déplacement de son organe d'obturation (5') respectivement entre une position à distance de la région (3') du boîtier comportant ladite ouverture d'entrée (3) et une position proche, voire au contact, de cette région (3'),
les moyens élastiques (6, 7) consistant en deux ressorts agissant de manière mutuellement antagoniste sur le clapet (5) en vue de son déplacement, un premier ressort (6) sollicitant le clapet (5) à distance de l'ouverture d'entrée (3) et le second ressort (7) sollicitant ledit clapet (5) vers ladite ouverture d'entrée (3),
dans laquelle la force (F7) du second ressort (7) est, d'une part, au moins égale à la force (F6) du premier ressort (6) et, d'autre part, inférieure à la somme de la force (F6) du premier ressort (6) et de la force de pression (FP) du flux gazeux autorisé (FGA) sur l'organe d'obturation (5') du clapet (5), dans laquelle ledit clapet (5) est, en l'absence de tout flux gazeux, déplacé et maintenu par le premier ressort (6) dans une position de décollement, correspondant préférentiellement tout juste à une absence de contact entre l'organe d'obturation (5') et l'ouverture d'entrée (3) et/ou la région(3') de cette dernière, la vanne étant **caractérisée en ce qu'**elle comprend également une pièce (8)
d'agencement et de transmission d'effort, qui est montée mobile avec guidage dans le corps creux (1'), est soumise à l'action du second ressort (7) qui la sollicite en direction de la région (3') de l'ouverture d'entrée (3), coopère avec le clapet (5) et définit la position de décollement de ce dernier.

2. Vanne (1) selon la revendication 1, **caractérisée en ce que** la pièce (8) d'agencement et de transmission d'effort est configurée et agencée dans le corps creux (1') pour être directement soumise à l'action du second ressort (7) et pour transmettre la sollicitation de ce ressort au clapet (5) lorsqu'il est en contact avec ce dernier.

3. Vanne (1) selon la revendication 1 ou 2, **caractérisée en ce que** la force (F7) du second ressort (7) est supérieure à la force (F6) du premier ressort et **en ce qu'**elle comprend un moyen de butée (9) limitant le déplacement de ladite pièce (8) en direction de la région (3') de l'ouverture d'entrée (3) et déterminant une position de décollement calée pour le clapet (5).

4. Vanne (1) selon l'une quelconque des revendications 1 à 3, **caractérisée en ce que** le clapet (5) et le premier ressort (6) sont logés à l'intérieur de la pièce (8) d'agencement et de transmission d'effort, le clapet (5) étant en outre guidé par ladite pièce (8) lors de ses déplacements dans le corps creux (1'), qui peuvent s'effectués de concert avec ladite pièce (8) ou relativement à cette dernière.

5. Vanne (1) selon l'une quelconque des revendications 1 à 4, **caractérisée en ce que** le clapet (5) et la pièce (8) d'agencement et de transmission d'effort présentent des structures évidées et ajourées de manière à offrir une résistance limitée à l'écoulement d'un flux gazeux autorisé (FGA) à travers l'intérieur du corps creux (1'), préférentiellement une section de passage à leur niveau dans le boîtier qui est au moins égale en surface à celle de l'ouverture d'entrée (3).

6. Vanne (1) selon l'une quelconque des revendications 1 à 5, **caractérisée en ce que** l'ouverture d'entrée (3) et l'ouverture de sortie (4) sont situées mutuellement en regard, préférentiellement dans des parois opposées (10, 10') du corps creux (1'), et définissent par leur alignement mutuel une direction médiane (DE) d'écoulement pour le flux autorisé (FGA) traversant ledit corps creux (1') dans le sens ouverture d'entrée (3) vers ouverture de sortie (4), et **en ce que** cette direction médiane (DE) est confondue avec les axes centraux des premier et second ressorts (6 et 7) et avec la direction de déplacement en translation bidirectionnel du clapet (5) avec son organe d'obturation (5') dans le corps creux (1').

7. Vanne (1) selon l'une quelconque des revendications 1 à 6, **caractérisée en ce que** le clapet (5) et la pièce (8) d'agencement et de transmission d'effort sont montées mobiles entre elles, avec faculté de translation relative mutuelle selon la direction médiane (DE) limitée unidirectionnellement par butée axiale.

8. Vanne (1) selon l'une quelconque des revendications 1 à 7, **caractérisée en ce que** le premier ressort (6) consiste en un ressort de compression, prend appui sur la paroi (10) comportant l'ouverture d'entrée (3), avantageusement au niveau de la région (3') de cette dernière, entoure l'organe d'obturation (5') et contacte le clapet (5) au niveau d'une partie d'engagement (5") annulaire de ce dernier, qui est décalée par rapport à l'organe d'obturation (5') selon la direction médiane (DE) d'écoulement, **en ce que** le second ressort (7) consiste en un ressort de compression, prend appui sur la paroi (10') comportant l'ouverture de sortie (4) et contacte la pièce (8) d'agencement et de transmission d'effort au niveau d'une partie d'engagement (8') annulaire de cette dernière, et **en ce que** la partie d'engagement (8') annulaire de la pièce (8) d'agencement et de transmission d'effort comporte une empreinte (11) configurée pour une réception sensiblement calée de la partie d'engagement annulaire (5") du clapet (5), ces deux parties d'engagement annulaires (5" et 8') présentant avantageusement des formes plates.

9. Vanne (1) selon la revendication 8, **caractérisée en ce que** la pièce (8) d'engagement et de transmission d'effort est guidée en translation dans le corps creux (1') selon la direction médiane d'écoulement (DE) par coopération d'une partie d'engagement (8') de ladite pièce (8) avec des formations profilées (12) internes dudit corps (1'), la limitation du déplacement de ladite pièce (8) en direction de la région (3') de l'ouverture d'entrée (3), et donc la détermination de la position calée de décollement pour le clapet (5), étant obtenue soit par contact de ladite partie d'engagement (8') avec une ou des butées en extrémité desdites formations profilées (12), soit par contact de pattes (8") prolongeant ladite partie d'engagement (8') avec la région (3') du corps creux (1') comportant l'ouverture d'entrée (3).

10. Vanne selon l'une quelconque des revendications 1 à 9, **caractérisée en ce que** le corps creux (1') est formé de deux parties constitutives (13 et 13'), préférentiellement en matériau thermoplastique, assemblées entre elles au niveau d'un plan de joint (PJ), avantageusement perpendiculaire à une direction médiane (DE) d'écoulement pour le flux autorisé (FGA) traversant ledit corps creux (1'), chacune desdites parties comprenant l'une parmi les ouvertures d'entrée et de sortie (3, 4) et étant éventuellement prolongée d'un seul tenant par un embout de raccordement respectif (13").

11. Circuit de préchauffage pour système d'échappement à catalyseur (15), ledit circuit comprenant une pompe (14) injectant de l'air chaud dans une ligne de circulation (2) qui l'amène jusqu'au catalyseur (15),
circuit de préchauffage **caractérisé en ce qu'**il intègre une vanne de contrôle pour fluide gazeux (1) selon l'une quelconque des revendications 1 à 10, le flux gazeux injecté par la pompe (14) correspondants au flux gazeux autorisé (FGA) pour cette vanne (1).

## Patentansprüche

1. Steuerventil (1) für ein gasförmiges Fluid, das dazu bestimmt ist, in einer Leitung (2) zur Zirkulation eines gasförmigen Fluids montiert zu sein, wobei das Ventil (1) einen Hohlkörper (1') beinhaltet, der ein Gehäuse bildet, das dazu konfiguriert ist, von einem zulässigen Strom (FGA) eines gasförmigen Fluids durchquert zu werden, der zwischen einer Einlassöffnung (3) und einer Auslassöffnung (4) des Gehäuses zirkuliert, und in dem eine bewegliche Klappe (5) mit einem Verschlusselement (5') und elastische Mittel (6, 7), die auf die Klappe (5) wirken, montiert sind, wobei die Klappe (5) und die elastischen Mittel (6, 7) so eingerichtet und konfiguriert sind, dass die Klappe (5) im Fall des Vorhandenseins eines zulässigen Gasstroms (FGA) die Einlassöffnung (3) freigibt und im Fall des Vorhandenseins eines Gasstroms (FGI), der in umgekehrter Richtung zirkulieren möchte, die Einlassöffnung (3) verschließt, und zwar durch die Verschiebung ihres Verschlusselements (5') jeweils zwischen einer Position, die von der Region (3') des Gehäuses, die die Einlassöffnung (3) umfasst, entfernt ist, und einer Position, die dieser Region (3') nahe ist oder sie sogar berührt,
wobei die elastischen Mittel (6, 7) aus zwei Federn bestehen, die in Bezug auf die Verschiebung der Klappe (5) entgegengesetzt auf diese wirken, wobei eine erste Feder (6) die Klappe (5) von der Einlassöffnung (3) weg vorspannt und die zweite Feder (7) die Klappe (5) zu der Einlassöffnung (3) hin vorspannt,
wobei die Kraft (F7) der zweiten Feder (7) einerseits mindestens gleich der Kraft (F6) der ersten Feder (6) ist und andererseits kleiner als die Summe aus der Kraft (F6) der ersten Feder (6) und der Druckkraft (FP) des zulässigen Gasstroms (FGA) auf das Verschlusselement (5') der Klappe (5) ist, wobei die Klappe (5), wenn gar kein Gasstrom vorhanden ist, durch die erste Feder (6) verschoben und in einer abgelösten Position gehalten wird, die vorzugsweise gerade eben keinem Kontakt zwischen dem Verschlusselement (5') und der Einlassöffnung (3) und/oder der Region (3') derselben entspricht, wobei das Ventil **dadurch gekennzeichnet ist, dass** es ferner ein Anordnungs- und Kraftübertragungsteil (8) beinhaltet, das beweglich und geführt in dem Hohlkörper (1') montiert ist, der Wirkung der zweiten Feder (7) unterliegt, die es in Richtung der Region (3') der Einlassöffnung (3) vorspannt, mit der Klappe (5) zusammenwirkt und die abgelöste Position derselben definiert.

2. Ventil (1) nach Anspruch 1, **dadurch gekennzeichnet, dass** das Anordnungs- und Kraftübertragungsteil (8) so konfiguriert und in dem Hohlkörper (1') angeordnet ist, dass es direkt der Wirkung der zweiten Feder (7) unterliegt und die Vorspannung dieser Feder auf die Klappe (5) überträgt, wenn es mit dieser in Kontakt ist.

3. Ventil (1) nach Anspruch 1 oder 2, **dadurch gekennzeichnet, dass** die Kraft (F7) der zweiten Feder (7) größer als die Kraft (F6) der ersten Feder ist und dass es ein Anschlagmittel (9) beinhaltet, das die Verschiebung des Teils (8) in Richtung der Region (3') der Einlassöffnung (3) begrenzt und eine kalibrierte abgelöste Position für die Klappe (5) bestimmt.

4. Ventil (1) nach einem der Ansprüche 1 bis 3, **dadurch gekennzeichnet, dass** die Klappe (5) und die erste Feder (6) innerhalb des Anordnungs- und Kraftübertragungsteils (8) aufgenommen sind, wobei die Klappe (5) bei ihren Verschiebungen in dem Hohlkörper (1'), die gemeinsam mit dem Teil (8) oder relativ zu diesem ausgeführt werden können, ferner durch das Teil (8) geführt wird.

5. Ventil (1) nach einem der Ansprüche 1 bis 4, **dadurch gekennzeichnet, dass** die Klappe (5) und das Anordnungs- und Kraftübertragungsteil (8) ausgesparte und durchbrochene Strukturen aufweisen, um der Strömung eines zulässigen Gasstroms (FGA) durch das Innere des Hohlkörpers (1') einen begrenzten Widerstand zu bieten, vorzugsweise einen Durchgangsquerschnitt in ihrem Bereich im Gehäuse aufweisen, der von der Fläche her mindestens dem der Einlassöffnung (3) entspricht.

6. Ventil (1) nach einem der Ansprüche 1 bis 5, **dadurch gekennzeichnet, dass** die Einlassöffnung (3) und die Auslassöffnung (4) einander gegenüberliegen, vorzugsweise in entgegengesetzten Wänden (10, 10') des Hohlkörpers (1'), und durch ihre gegenseitige Ausrichtung für den zulässigen Strom (FGA), der den Hohlkörper (1') in der Richtung von der Einlassöffnung (3) zu der Auslassöffnung (4) durchquert, eine Strömungsmedianrichtung (DE) definieren und dass diese Medianrichtung (DE) mit den Mittelachsen der ersten und zweiten Feder (6 und 7) und mit der bidirektionalen translatorischen Verschiebungsrichtung der Klappe (5) mit ihrem Verschlusselement (5') in dem Hohlkörper (1') zusammenfällt.

7. Ventil (1) nach einem der Ansprüche 1 bis 6, **dadurch gekennzeichnet, dass** die Klappe (5) und das Anordnungs- und Kraftübertragungsteil (8) zueinander beweglich montiert sind, mit der Möglichkeit einer gegenseitigen relativen Translation gemäß der Medianrichtung (DE), die in einer Richtung durch einen axialen Anschlag begrenzt wird.

8. Ventil (1) nach einem der Ansprüche 1 bis 7, **dadurch gekennzeichnet, dass** die erste Feder (6) aus einer Druckfeder besteht, an der Wand (10), die die Einlassöffnung (3) umfasst, vorteilhafterweise in der Region (3') derselben, anliegt, das Verschlusselement (5') umgibt und die Klappe (5) an einem ringförmigen Eingriffsteil (5") derselben berührt, welcher in Bezug auf das Verschlusselement (5') gemäß der Strömungsmedianrichtung (DE) versetzt ist, dass die zweite Feder (7) aus einer Druckfeder besteht, an der Wand (10'), die die Auslassöffnung (4) umfasst, anliegt und das Anordnungs- und Kraftübertragungsteil (8) an einem ringförmigen Eingriffsteil (8') desselben berührt und dass der ringförmige Eingriffsteil (8') des Anordnungs- und Kraftübertragungsteils (8) eine Vertiefung (11) umfasst, die dazu konfiguriert ist, den ringförmigen Eingriffsteil (5") der Klappe (5) auf im Wesentlichen kalibrierte Weise aufzunehmen, wobei diese zwei ringförmigen Eingriffsteile (5" und 8') vorzugsweise flache Formen aufweisen.

9. Ventil (1) nach Anspruch 8, **dadurch gekennzeichnet, dass** das Anordnungs- und Kraftübertragungsteil (8) in dem Hohlkörper (1') durch ein Zusammenwirken eines Eingriffsteils (8') des Teils (8) mit profilierten Innenausformungen (12) des Körpers (1') gemäß der Strömungsmittenrichtung (DE) translatorisch geführt wird, wobei die Begrenzung der Verschiebung des Teils (8) in Richtung der Region (3') der Einlassöffnung (3) und somit die Bestimmung der kalibrierten abgelösten Position für die Klappe (5) entweder durch Kontakt des Eingriffsteils (8') mit einem oder mehreren Anschlägen am Ende der profilierten Ausformungen (12) oder durch Kontakt von Laschen (8"), die den Eingriffsteil (8') verlängern, mit der Region (3') des Hohlkörpers (1'), die die Einlassöffnung (3) umfasst, erhalten wird.

10. Ventil nach einem der Ansprüche 1 bis 9, **dadurch gekennzeichnet, dass** der Hohlkörper (1') aus zwei Bestandteilen (13 und 13'), vorzugsweise aus thermoplastischem Material, gebildet ist, die an einer Trennebene (PJ), die vorteilhafterweise zu einer Strömungsmittenrichtung (DE) für den zulässigen Strom (FGA), der den Hohlkörper (1') durchquert, senkrecht ist, zusammengefügt sind, wobei jeder der Teile eine von der Einlass- und Auslassöffnung (3, 4) beinhaltet und eventuell einstückig durch einen jeweiligen Anschlussstutzen (13") verlängert wird.

11. Vorwärmkreislauf für ein Abgassystem mit Katalysator (15), wobei der Kreislauf eine Pumpe (14) beinhaltet, die warme Luft in eine Zirkulationsleitung (2) einspritzt, welche diese bis zu dem Katalysator (15) führt, wobei der Vorwärmkreislauf **dadurch gekennzeichnet ist, dass** er ein Steuerventil für ein gasförmiges Fluid (1) nach einem der Ansprüche 1 bis 10 enthält, wobei der Gasstrom, der durch die Pumpe (14) eingespritzt wird, dem zulässigen Gasstrom (FGA) für dieses Ventil (1) entspricht.

## Claims

1. Control valve (1) for gaseous fluid, intended to be mounted in a gaseous fluid circulation line (2), said valve (1) comprising a hollow body (1') forming a housing, which is configured to be passed through by an authorized stream (FGA) of gaseous fluid circulating between an inlet opening (3) and an outlet opening (4) of said housing and in which are mounted a mobile shutter (5) with a shut-off member (5') and elastic means (6, 7) acting on said shutter (5), said shutter (5) and the elastic means (6, 7) being arranged and configured in such a way that the shutter (5) opens up the inlet opening (3) in the event that an authorized gas stream (FGA) is present and shuts off said inlet opening (3) in the event that a gas stream (FGI) that tends to circulate in the opposite direction is present, this being by movement of its shut-off member (5') respectively between a position at a distance from the region (3') of the housing that has said inlet opening (3) and a position close to, or even in contact with, this region (3'),
the elastic means (6, 7) consisting of two springs acting in a mutually opposing manner on the shutter (5) with a view to its movement, a first spring (6) urging the shutter (5) away from the inlet opening (3) and the second spring (7) urging said shutter (5) towards said inlet opening (3),
wherein the force (F7) of the second spring (7) is, on the one hand, at least equal to the force (F6) of the first spring (6) and, on the other hand, less than the sum of the force (F6) of the first spring (6) and the pressure force (FP) of the authorized gas stream (FGA) on the shut-off member (5') of the shutter (5), wherein said shutter (5) is, in the absence of any gas stream, moved and held by the first spring (6) in a detachment position, preferentially just corresponding to an absence of contact between the shut-off member (5') and the inlet opening (3) and/or the region (3') of the latter, the valve being **characterized in that** it also comprises an arrangement and force transmission piece (8), which is mounted so as to be able to move with guidance in the hollow body (1'), is subjected to the action of the second spring (7), which urges it in the direction of the region (3') of the inlet opening (3), cooperates with the shutter (5) and defines the detachment position of the latter.

2. Valve (1) according to Claim 1, **characterized in that** the arrangement and force transmission piece (8) is configured and arranged in the hollow body (1') so as to be directly subjected to the action of the second spring (7) and to transmit the urging of this spring to the shutter (5) when it is in contact with the latter.

3. Valve (1) according to Claim 1 or 2, **characterized in that** the force (F7) of the second spring (7) is greater than the force (F6) of the first spring and **in that** it comprises a stop means (9) limiting the movement of said piece (8) in the direction of the region (3') of the inlet opening (3) and determining a wedged detachment position for the shutter (5).

4. Valve (1) according to any one of Claims 1 to 3, **characterized in that** the shutter (5) and the first spring (6) are housed inside the arrangement and force transmission piece (8), the shutter (5) also being guided by said piece (8) during its movements in the hollow body (1'), which can be effected together with said piece (8) or relative to the latter.

5. Valve (1) according to any one of Claims 1 to 4, **characterized in that** the shutter (5) and the arrangement and force transmission piece (8) have hollowed-out and perforated structures so as to offer limited resistance to the flow of an authorized gas stream (FGA) through the inside of the hollow body (1'), preferentially a passage section at their level in the housing that is at least equal in surface area to that of the inlet opening (3).

6. Valve (1) according to any one of Claims 1 to 5, **characterized in that** the inlet opening (3) and the outlet opening (4) are situated facing one another, preferentially in opposite walls (10, 10') of the hollow body (1'), and define by their mutual alignment a median flow direction (DE) for the authorized stream (FGA) passing through said hollow body (1') in the direction from the inlet opening (3) towards the outlet opening (4), and **in that** this median direction (DE) is coincident with the central axes of the first and second springs (6 and 7) and with the direction of movement in bidirectional translation of the shutter (5) with its shut-off member (5') in the hollow body (1').

7. Valve (1) according to any one of Claims 1 to 6, **characterized in that** the shutter (5) and the arrangement and force transmission piece (8) are mounted so as to be able to move relative to each other, with a capability for mutual relative translation in the median direction (DE) that is limited unidirectionally by axial abutment.

8. Valve (1) according to any one of Claims 1 to 7, **characterized in that** the first spring (6) consists of a compression spring, bears on the wall (10) that has the inlet opening (3), advantageously at the region (3') of the latter, surrounds the shut-off member (5') and contacts the shutter (5) at an annular engagement part (5") of the latter, which is offset relative to the shut-off member (5') in the median flow direction (DE), **in that** the second spring (7) consists of a compression spring, bears on the wall (10') that has the outlet opening (4) and contacts the arrangement and force transmission piece (8) at an annular engagement part (8') of the latter, and **in that** the annular engagement part (8') of the arrangement and force transmission piece (8) has an indentation (11) configured for substantially wedged reception of the annular engagement part (5") of the shutter (5), these two annular engagement parts (5" and 8') advantageously having flat shapes.

9. Valve (1) according to Claim 8, **characterized in that** the engagement and force transmission piece (8) is guided in translation in the hollow body (1') in the median flow direction (DE) by cooperation of an engagement part (8') of said piece (8) with internal profiled formations (12) of said body (1'), the limitation of the movement of said piece (8) in the direction of the region (3') of the inlet opening (3), and therefore the determination of the wedged detachment position for the shutter (5), being obtained either by contact of said engagement part (8') with one or more stops at the end of said profiled formations (12), or by contact of tabs (8") extending said engagement part (8') with the region (3') of the hollow body (1') that has the inlet opening (3).

10. Valve according to any one of Claims 1 to 9, **characterized in that** the hollow body (1') is formed of two constituent parts (13 and 13'), preferentially made of thermoplastic material, joined together at a joint plane (PJ), advantageously perpendicular to a median flow direction (DE) for the authorized stream (FGA) passing through said hollow body (1'), each of said parts comprising one of the inlet and outlet openings (3, 4) and possibly being extended in a single piece by a respective connection end (13").

11. Preheating circuit for an exhaust system with a catalytic converter (15), said circuit comprising a pump (14) injecting hot air into a circulation line (2) that brings it to the catalytic converter (15), which preheating circuit is **characterized in that** it integrates a control valve for gaseous fluid (1) according to any one of Claims 1 to 10, the gas stream injected by the pump (14) corresponding to the authorized gas stream (FGA) for this valve (1).
